# EUROPEAN PATENT SPECIFICATION

(11) **EP 1 257 895 B1**
(45) Date of publication and mention of the grant of the patent: **08.04.2015**
(21) Application number: 01907209.9
(22) Date of filing: 14.02.2001
(51) Int. Cl.: G06F 1/32, G11B 20/10, G06F 3/16

(54) **AUDIO CONTROLLER FOR PORTABLE ELECTRONIC DEVICES**
AUDIO-STEUERUNG FÜR TRAGBARE ELEKTRONISCHE GERÄTE
SYSTEME DE COMMANDE AUDIO POUR DISPOSITIFS ELECTRONIQUES PORTATIFS

(30) Priority: 15.02.2000 US 182448 P; 17.02.2000 US 183181 P; 07.07.2000 US 216853 P; 29.08.2000 US 650515
(43) Date of publication of application: 20.11.2002
(73) Proprietor: O2 Micro, Inc., Santa Clara, CA 95054 (US)
(72) Inventor: DU, Sterling, Palo Alto, CA 94306 (US); CHAN, Reginia, Los Altos, CA 94024 (US)
(74) Representative: Lippert, Stachow & Partner
(86) International application number: PCT/US2001/004628
(87) International publication number: WO 2001/061442

(56) References cited:
- EP-A2- 0 945 778
- KR-A- 19990 078 492
- US-A- 6 009 500

## Description

### BACKGROUND OF THE INVENTION

### 1. Field of the Invention

The present invention relates generally to portable devices for reproducing audio recordings, and more particularly, to a device for reproducing compressed digital audio recordings. Particular utility for the present application is in the reproduction of MP3 digital audio files, especially for use with portable computers, however other utilities are contemplated herein.

### 2. Description of Related Art

Presently there exist various portable devices for replaying digital audio recordings that have been compressed in accordance with a compressed audio digital recording format called MP3. These devices can be divided into two classes, those which store the MP3 compressed digital audio recordings in an electronic solid state memory, and those which record the compressed digital audio for subsequent reproduction using an electro-mechanical device such as a compact disk ("CD") player or on a hard disk drive of a digital computer.

Portable devices for replaying MP3 compressed digital audio recordings that use electronic solid state memory, i.e. flash-memory, are capable of storing about ten (10) music selections. With an add-in memory card, such devices can carry a total of about twenty (20) music selections. These MP3 players that store the MP3 compressed digital audio recordings in an electronic solid state memory consume comparatively little electrical power. Thus, such MP3 players provide an extended playing interval without battery replacement or recharging for the limited number of selections which they can store.

In addition to having a capacity for only a limited number of music selections, another characteristic of portable MP3 players that store compressed digital audio recordings in an electronic solid state memory is the inconvenience associated with loading the music selections into that memory. In general, such MP3 players require first downloading or obtaining copies of MP3 compressed digital audio recordings on a hard disk drive of a personal computer, and then transferring the MP3 compressed digital audio recordings from the personal computer to the portable MP3 player. The preceding operations are to be contrasted with the simplicity of merely inserting a compact disk ("CD") into a CD player, or playing MP3 compressed digital audio recordings directly from a hard disk drive or CD drive of a digital computer.

MP3 players which preserve compressed digital audio recordings for reproduction using an electro-mechanical device are capable of storing many more music selections than portable MP3 players that store compressed digital audio recordings in an electronic solid state memory, e. g. hundreds or even more than one thousand. However, usually MP3 players that use electro-mechanical devices require significant amounts of electrical power. Thus, portable players that reproduce music selections using an electro-mechanical device exhibit comparatively short playing interval, e. g. less than one (1.0) hour before batteries must be replaced or recharged.

Batteries used in laptop and notebook computers usually permit their operation for several hours before becoming discharged. As is readily apparent, a laptop or notebook computer can be to play MP3 compressed digital audio recordings using either the computer's CD-ROM or hard disk drive. Pending United States Patent Application Serial No. 09/136,207, now U. S. Patent No., entitled "Low Power CD-ROM Player for Portable Computers "that was filed on August 19,1998, which is hereby incorporated by reference in its entirety, describes how a conventional laptop or notebook computer, when simply playing a conventional music CD, consumes an unnecessarily large amount of electrical energy. Such an excessive electrical energy consumption drains a laptop or notebook computer's battery of power that is more prudently applied in performing microprocessor intensive tasks such as word processing and spreadsheet analysis. The solution presented in the'207 application is a state machine that operates when main power to the portable device is OFF. The'207 invention couples a CD-ROM to the audio subsystem (when main power is OFF) so that CDs can be played, without excessive battery drain, or without having to boot up the portable computer.

European patent publication EP 0945778 A2 refers to a computer system adapted to play audio files, said computer system comprising: a computer subsystem comprising a system CPU, a system computer bus and a drive for storing audio data, an audio controller comprising a drive interface for selectively accessing said audio data from said drive and decoder circuitry decoding said audio data and generating decoded stream of audio data, said audio controller being adapted to access, store and play said audio data and being adapted to access said drive to retrieve said audio data and decode said audio data when said computer subsystem is in an inactive state.

### SUMMARY OF THE INVENTION

Accordingly, it is one object of the present invention to adapt laptop and notebook digital computers for reproducing compressed digital audio recordings when main power to the computer system is OFF. Another object of the present invention is to adapt laptop and notebook digital computers for storing MP3 compressed digital audio recordings into a conventional portable MP3 player using as little energy as is practicable.

The present invention provides a computer system adapted to play audio files, said computer system comprising: a computer subsystem comprising a system CPU, a system computer bus and a drive for storing audio data, an audio controller comprising a drive interface for selectively accessing said audio data from said drive, and decoder circuitry for decoding said audio data and generating decoded audio data stream, said audio controller being adapted to access, store and play said audio data and being adapted to access said drive to retrieve said audio data and decode said audio data when said computer subsystem is in an inactive state. Said audio controller further comprises a switch for switching said audio controller to an inactive state when said power is supplied to said computer subsystem such that said audio controller is decoupled from said computer system bus thereby becoming transparent to said drive, and for switching said audio controller to an active state when said power is not being supplied to said computer subsystem. The inventive computer system is characterized by that said audio controller comprising memory storing said audio data and memory storing updatable version of a decoder algorithm, said audio controller being adapted to send decoded audio data to an external player via an I/O interface when said audio controller is in said active state, wherein said audio controller further being adapted to be operated by function key functionality of said external player.

In method form, the present invention provides a method for playing audio files in a computer system when said computer system is in an inactive state, comprising the steps of: Activating an audio controller if a main CPU of said computer system is in an inactive state, selecting desired audio data, controlling a drive interface of said audio controller to access said audio data from a drive of said computer system, controlling said drive interface to retrieve said audio data, and decoding selected audio data and generating a decoded audio data stream from said selected audio data, wherein said audio controller including a switch for switching said audio controller to an inactive state when a power is supplied to said main CPU such that said audio controller is decoupled from a computer system bus thereby becoming transparent to said drive and for switching said audio controller to an active state when said power is not being supplied to said main CPU. The inventive method is characterized by that an updatable version of decoder algorithm is stored in memory, said selected audio data is stored in memory associated with said audio controller and wherein said audio controller sending decoded audio data to an external player via an I/O interface when said audio controller is in said active state, wherein said audio controller being operated by function key functionality of said external player.

It will be appreciated by those skilled in the art that although the following Detailed Description will proceed with reference being made to preferred embodiments and methods of use, the present invention is not intended to be limited to these preferred embodiments and methods of use. Rather, the present invention is of broad scope and is intended to be limited as only set forth in the accompanying claims.

Other features and advantages of the present invention will become apparent as the following Detailed Description proceeds, and upon reference to the Drawings, wherein like numerals depict like parts, and wherein:

### Brief Description of the Drawings

Figure 1 is an exemplary block diagram of a portable system in an ON state adapted to receive and play MP3 digital audio files, according to one embodiment of the present invention;
Figure 2 is an exemplary block diagram of a portable system in an OFF or inactive state adapted to receive and play MP3 digital audio files, according to one embodiment of the present invention;
Figure 3 is a more detailed system block diagram of the invention of Figures 1 and 2;
Figure 4 is a detailed block diagram of the MP3 audio controller of the invention of Figures 1 and 2;
Figure 5A is an exemplary block diagram of another embodiment of the present invention, depicting a portable system in an ON state, adapted to receive and play MP3 digital audio files, and utilizing an external MP3 decoding device; and
Figure 5B is an exemplary block diagram of another embodiment of the present invention, depicting a portable system in an OFF or inactive state adapted to receive and play MP3 digital audio files, and utilizing an external MP3 decoding device.

### Detailed Description of Exemplary Embodiments

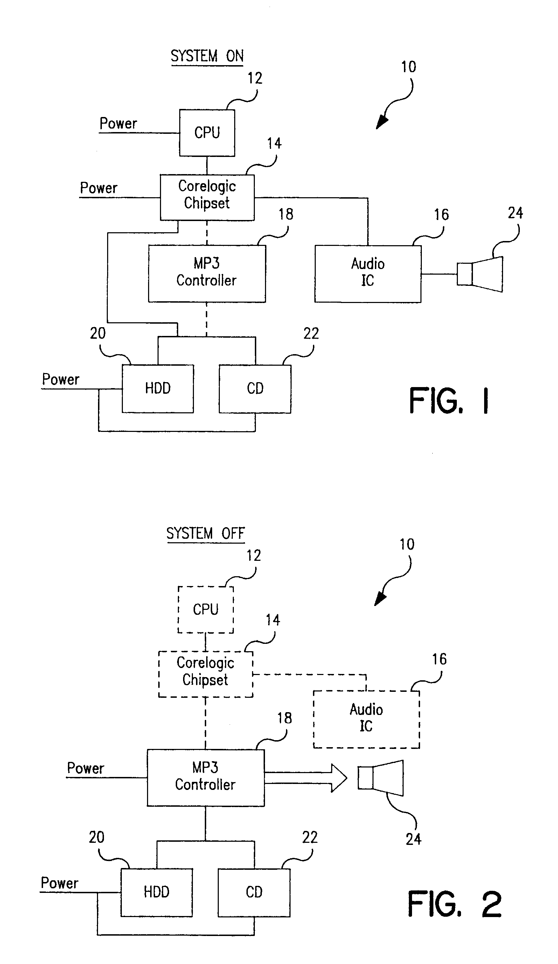

Figures 1-4 depict an example of the preferred MP3 audio controller of the present invention. As an overview, the present invention is directed to an MP3 audio controller 18 adapted to play stored MP3 files. It is intended, in this embodiment, that the MP3 controller of the present invention be integrated within a computer system 10 (e.g., portable lap-top computer) and is adapted with the necessary logic to permit selection, retrieval and play of MP3 files stored locally on the computer, without the necessity of having the computer system turned ON. As used herein, the term inactive is defined to mean a state in which main power is not being supplied (i.e., an OFF state), or when the system is in a sleep mode (such as may be defined under power management specifications). Thus, the present invention provides significant power savings when playing MP3 audio files.

Figure 1 depicts a computer system 10 adapted with the MP3 controller 18 of the present invention in an ON state. Generally, the computer system 10 includes a system CPU 12, a Corelogic chipset 14, a hard disk drive (HDD) 20, a CD-ROM drive (CD) 22, and an audio subsystem (denoted as "audio IC") 16 coupled to a speaker system 24. When main power is being delivered to the system 10 (i.e., the computer is ON), it is preferable that the MP3 controller does not control the play of MP3 files, since such functionality is usually handled by the CPU 12 and an MP3 decoder (typically software). Thus, when the system is ON, the MP3 controller 18 is transparent to commands between the drives 20 and/or 22 and the CPU. Although the figures depict drives 20 and 22 as a hard disk device and a CD-ROM device, respectively, it is intended that any drive mechanism (e.g., RAM drive, DVD drive, backup drive, etc.) known to those skilled in the art can be substituted for these drives 20 and/or 22 without departing from the present invention.

Conversely, when the system is OFF, as depicted in Figure 2, the MP3 controller of the present invention operates to permit users to traverse the drives 20 and/or 22 to play MP3 files stored therein directly, without requiring that the CPU 12, CPU chipset 14, or audio subsystem 16 be operating. To that end, as shown in this Figure, system power need only be supplied to the controller 18, and to the drives 20, 22.

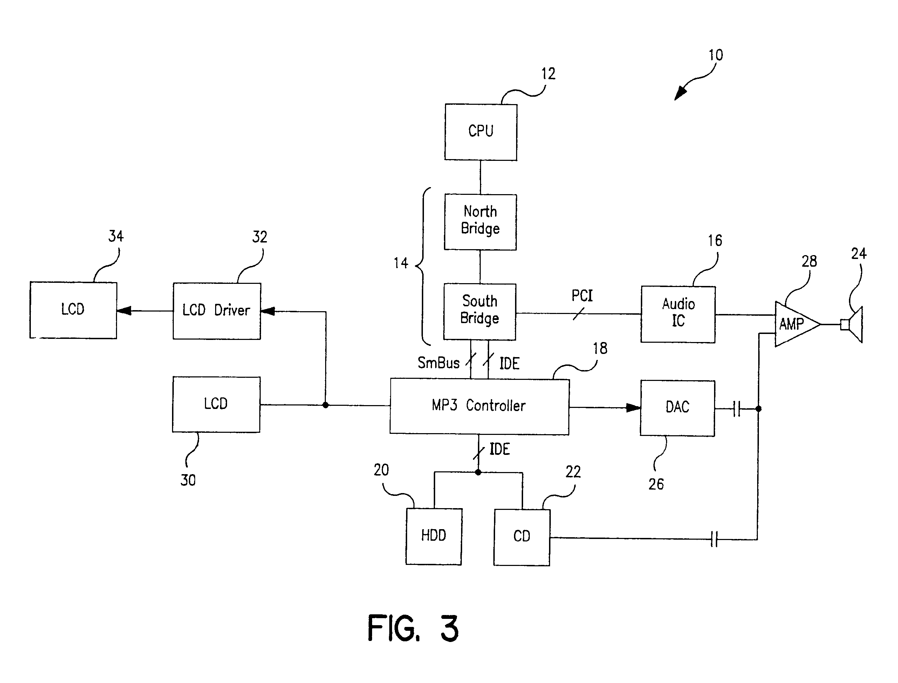

The system block diagram of Figure 3 represents a more detailed view of the computer system 10, adapted with the MP3 controller of the present invention. As shown, the CPU 12 and Corelogic chipset 14 (depicted as conventional "North Bridge" and "South Bridge" I/O chipsets) communicate with controller 18, using both an SMBus and an IDE bus. As is understood in the art, coupling of the controller 18 to an SMBus permits the user-programmability of the controller 18. The controller 18 also communicates with the drives 20 and/or 22 along the system IDE bus. As will be described in more detail below, controller 18 can include an integrated audio DAC IC, or be adapted to feed a decompressed MP3 file to an external audio DAC 26. The external audio DAC 26 may be included as part of the integrated computer system 10 and/or a subset of the audio IC 16. In either event, the converted audio files are amplified (at amplifier 28) to provide an audible signal to speaker system 24. Additionally, as noted above, controller 18 is adapted to control drives 20, 22 to read MP3 files therefrom. To that end, to permit users to traverse directory structures on the drives, an external LCD display 30 is preferably provided. The LCD display receives directory information from drives 20 and 22 (via controller 18) and displays that information by file name/location. Likewise, the LCD display preferably displays current status information of the controller 18, as will be described in greater detail below. It should be noted that the use of LCD display 30 requires that controller 18 be adapted with appropriate LCD display driver circuitry. It may be the case, however, that the computer system 10 includes and LCD display 34 and LCD driver circuitry 32, in which case, controller 18 may be coupled directly thereto.

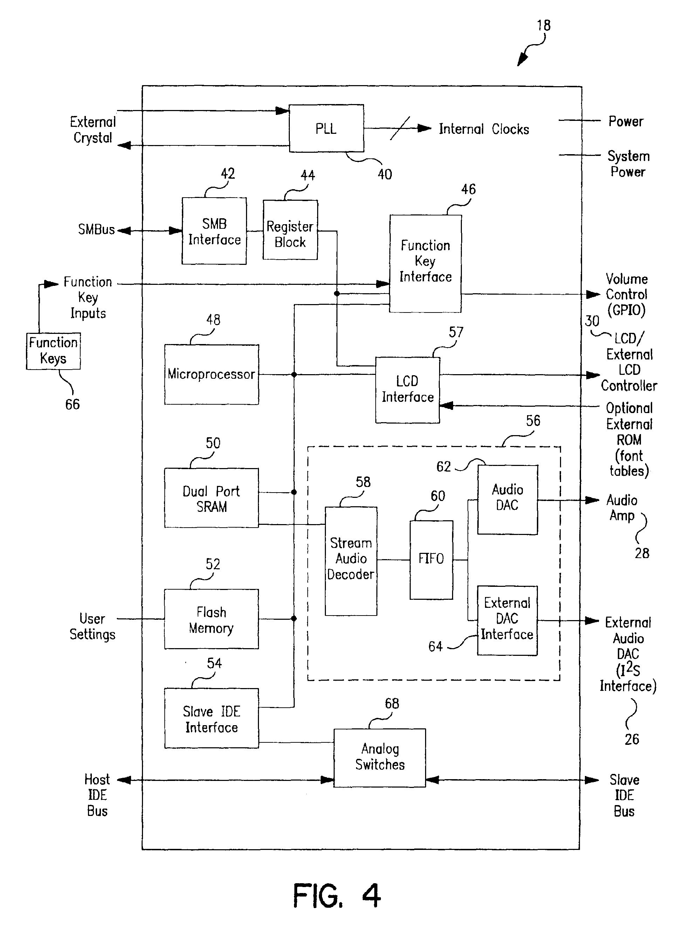

Figure 4 depicts a detailed block diagram of the MP3 controller 18 of the present invention. As an overview, controller 18 includes an internal processor 48, memory 50 and 52, IDE bus interface 54, SMBus interface 42 and MP3 decoding circuitry 56. The overall functionality of controller 18 is the ability to traverse drives 20, 22, permit users to choose a desired MP3 file, decompress the MP3 file and output either a digital or analog signal (to be played by and external amplifier and speaker system). Each of these components depicted in Figure 4 are described below.

Processor 48 is provided to control the general I/O functions, including access, traversal and retrieval commands for drives 20 or 22. In the preferred embodiment, external function keys 66 are provided to permit users to operate controller 18 and drives 20 or 22 to play MP3 files. Function keys can include play, pause, fast forward, rewind, next track, previous track, scan, etc. (or any combination thereof). Since, in the preferred embodiment, the controller 18 of the present invention permits traversal of directory structures and retrieval of files, it is also preferable to include MENU and ENTER function keys 66. Controller 18 includes a function key interface 46 to interpret commands generated by function keys 66 and generate commands to the processor 48. Instructions for retrieval and play of MP3 files are stored in flash memory 52. These instructions are preferably user-programmable firmware, permanently resident in memory 52. Upon activation of a function key, processor 48 receives instructions from memory 52. To communicate with drives containing MP3 data, a slave IDE interface 54 is provided. Upon user commands generated by the function keys, processor 48 instructs slave IDE interface to control one of the drives to begin traversing the directory structure. The directory structure in which MP3 files are stored may be fixed (for example, a directory may be user-specified and stored in flash memory 52), or the controller can permit users to traverse all directories and files on the drive. Once a user has selected an MP3 file and wishes to play that file (by pressing a play function key, for example), processor 48 instructs the slave IDE interface 54 to retrieve that file from the drive. Preferably, to minimize disk activity once a file selection is obtained, the file is transferred into RAM memory 50. It is most preferable to include dual port SRAM 50, as shown, to store both the audio file and to temporarily store instructions and/or program parameters used by the processor 48. Once the audio file is loaded into memory 50, the data is fed to MP3 decoder circuitry 56.

Decoder circuitry 56 comprises a stream audio decoder 58, buffer memory 60 and either an internal audio DAC 62, or a DAC interface 64 for communicating with an external audio DAC 26. Stream audio decoder 58 receives streaming audio data from memory 50 and decodes the data according to a decoder algorithm stored therein. Alternatively, a decoder algorithm may be stored in flash memory 52, loaded into memory 50 upon activation of the controller, and supplied to the decoder 58.

Either way, users **is permitted** to update/modify the decoding algorithm.

Accordingly, memory 52 or decoder 58 stores an updatable version of the decoder algorithm. In the preferred embodiment, decoder 58 is an MP3 audio file decoder. The output data generated by decoder 58 is decompressed digital audio data, and may include standard digital audio formats like PCM format data.

The decoder outputs the decompressed data to a first in-first out (FIFO) buffer 60. If controller 18 is adapted with an internal DAC, data from the buffer 60 is fed into the DAC 60, which generates an analog audio signal, which in turn is fed to amplifier 28 and out to the speaker system (not shown). Alternately, if an external DAC is available in the computer system 10 (for example, as part of the audio IC), the decoder can include an appropriate interface 64. Interface 64 receives digital data from memory 60 and communicates with an external DAC. In a similar fashion, the external DAC 26 generates an analog signal which is supplied to the amplifier 28 and speaker system.

As discussed briefly above, the controller preferably includes an SMBus interface 42 to permit controller 18 to communicate with an SMBus of computer system 10. The SMBus is provided for when the system is ON to pass along function key commands to the system 14 and 12, and is also used to access the flash memory 52 of the controller 18 to permit upgrades and/or changes therein. Once commands are sent to the interface 46, said commands are communicated to the processor 48 for processing. It is also preferable that controller 18 include an LCD interface 57, which is coupled to the SMBus (via register block 44) and processor 48. In this way, the LCD interface 57 can generate signals indicative of both the users actions via function key interface 46, and the processor status. Processor status may include overall operation status (e.g., file loading, decompressing, file not found, etc.) and specific operational parameters (e.g., error status, component failure, etc.). Additionally, it is preferable to display the drive data, which may include directory tree structure, file name(s), etc. Additionally, MP3 files typically contain an ID tag that is descriptive of the title, song, etc. It is preferable that LCD interface 57 be adapted to read and display this tag data. Thus, LCD interface 57 is preferably adapted to display such drive data generate by processor 48.

Controller 18 includes an internal clocking mechanism 40 to clock the circuitry of the controller, and to communicate with timed devices (drives 20 or 22) over a timed bus (e.g., IDE bus). It will be understood by those skilled in the art that more than one clock frequency is typically required, for example, differing clocks supplied to processor 48, decoder 58 and audio DAC 62. The clock mechanism preferably includes a PLL timer that is clocked by a set crystal, as shown.

As described above, the controller 18 of the preferred embodiment operates to play compressed audio files when the system 10 is OFF. To that end, it is preferred that the controller 10 is activated by a user pressing one of the function keys (i.e., system power is supplied to controller 18 by pressing one of the function keys 66). Upon this event, power is coupled to the components of controller 18, and to the drive systems 20 and/or 22. By the same token, if the system 10 is ON, the controller of the present invention includes switches 68. Switches 68 operate to decouple the controller 18 from the IDE bus (as shown in Figure 3), thereby becoming transparent to the drives 20, 22 and the audio subsystem 16.

It should be noted that the controller 18 is preferably operable with both hard disk drives 20 and CD-ROM drives 22, either of which are conventional storage media for MP3 audio files. Accordingly, function keys 66 also preferably include activation keys for the CD-ROM drive, which may include EJECT, FF/SCAN-FF, RW/SCAN-RW, PLAY, PAUSE, STOP, MENU, ENTER etc.

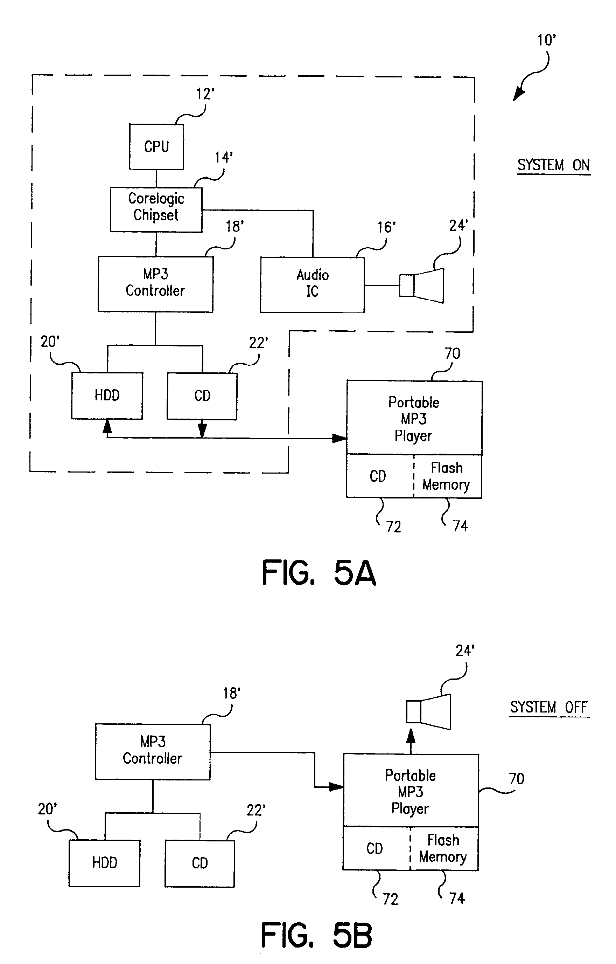

Figures 5A and 5B depict another embodiment of the computer system 10' of the present invention. Similar to the embodiment of Figures 1 and 2, the present embodiment includes an MP3 controller 18' incorporated into a computer system 10'. In this embodiment, however, the controller 18' is operable with an external MP3 player 70. Figure 5A depicts the system 10' when power is supplied to the system components: CPU 12', Corelogic chipset 14', Audio IC 16' and drives 20' and/or 22'. When the system is on, MP3 audio files stored on either drive 20' or 22' can be transferred to the external device 70. External MP3 players may include a CD player 72 for reading CDs having MP3 files stored thereon, and/or internal memory 74 for temporary storage of MP3 files. Similar to the previous embodiment, controller 18' preferable is transparent to system 10' when power is ON. In Figure 5B, the system components are OFF or inactive. Controller 18' operates to decompress MP3 files and send the decompressed data to external player 70. Alternatively, controller 18' can operate to transmit the compressed data to the external player 70, where the data is decompressed into an appropriate audio format by the player 70. It is preferable that the external device 70 include conventional I/O interface (not shown) for connection to controller 18' (via system 10'). For example, controller 18' and player 70 may include conventional RS232 (serial), USB, and/or TCP/IP communications to exchange commands and transfer data therebetween. The decompressed files can be stored in memory 74 of the external player 70.

Controller 18' includes similar components as the controller 18 of the previous embodiment, except that it may not be necessary to include function keys 66 and function key interface 46, since it is likely that portable player 70 includes such functionality. Similarly, it may not be necessary to include display functionality with controller 18' if portable player 70 is equipped with an appropriate display to view drive directory structures and files.

Thus, it is evident that there has been disclosed an audio controller for portable electronic devices that satisfies the aims and objectives stated herein. Those skilled in the art will recognize numerous modifications that may be made to the present invention. For example, although the controller 18 and 18' of the present invention has been described with reference to MP3 audio data, it should be readily apparent that the controller 18 and 18' is independent of the specific format of audio data, and should instead be viewed as a general-purpose audio controller capable of receiving, playing, and/or decompressing any type of audio data, not limited to MP3 format data.

Other modifications are possible. For example, the controller 18 of Figures 3 and 4 is depicted and described as being coupled (or decoupled) to an IDE bus, those skilled in the art will recognize that the controller can likewise include other bus interface technologies, depending on the bus configuration of system 10. Thus, for example, controller 18 may be modified to control SCSI drives, and include an SCSI interface for exchanging commands and data according to SCSI protocols. Likewise, it may be desirable to adapt controller 18 with conventional network protocols (e.g., TCP/IP, etc.) for communication with remote systems (not shown) in a conventional network.

Still further modifications are possible. The controller 18 of the present invention has been described herein as including decoding circuitry 56 to decode audio data when the system 10 is OFF. However, it is contemplated that audio files, such as MP3 files could be decoded and stored in a decoded format on the drives 20 and/or 22, for example when the system 10 is ON. If decoded (decompressed) is accessed by the controller 18, this data is stored into memory 50 and supplied directly to audio DAC 62 or audio DAC interface 64. In other words, no decoding is necessary for such data and controller 18 plays the decoded data directly. Those skilled in the art will recognize numerous additional modifications, and all such modifications are deemed within the spirit and scope of the present invention, only as limited by the appended claims.

## Claims

1. A computer system (10') adapted to play audio files, said computer system comprising: a computer subsystem comprising a system CPU (12'), a system computer bus and a drive for storing audio data (20', 22'); an audio controller ( 18' ) comprising a drive interface (54) for selectively accessing said audio data from said drive; and decoder circuitry (56) for decoding said audio data and generating decoded audio data stream, said audio controller (18') being adapted to access, store and play said audio data and being adapted to access said drive (20', 22') to retrieve said audio data and decode said audio data when said computer subsystem is in an inactive state; said audio controller (18') further comprising a switch (68) for switching said audio controller (18') to an inactive state when a power is supplied to said computer subsystem such that said audio controller (18') is decoupled from said computer system bus thereby becoming transparent to said drive (20', 22'), and for switching said audio controller (18') to an active state when said power is not being supplied to said computer subsystem; **characterized by** that said audio controller (18') comprising memory (50) storing said audio data and memory (52; 58) storing updatable version of a decoder algorithm; said audio controller (18') being adapted to send decoded audio data to an external MP3 player (70) via an I/O interface when said audio controller (18') is in said active state, wherein said audio controller (18') further being adapted to be operated by function key functionality of said external player (70).

2. A computer system as claimed in claim 1, wherein said decoder circuitry (56) further comprising a digital to analog circuit (60) receiving said decoded audio data stream and generating an analog audio signal.

3. A computer system as claimed in claim 1, wherein said decoder circuitry (56) further comprising a buffer memory (60) for temporary storage of said decoded audio data stream.

4. A computer system as claimed in claim 3, wherein said buffer memory (60) comprises a first-in-first-out (FIFO) memory.

5. A computer system as claimed in claim 1, wherein said audio controller (18') further comprising interface circuitry (64) to interface said decoded audio data stream with an external digital-to-analog converter circuit, and said computer subsystem further comprises said external digital-to-analog converter circuit for receiving said decoded audio data stream from said interface circuitry (64).

6. A computer system as claimed in claim 1, wherein said audio controller (18') further comprising an LCD interface (57) for generating signals to an LCD display for displaying directory and file information data associated with said drive.

7. A computer system as claimed in claim 1, wherein said audio controller (18') further comprising a function key interface (46) operable with a plurality of function keys, said function keys generating user commands to said audio controller (18') through said function key interface (46).

8. A computer system as claimed in claim 1, wherein said audio controller (18') further comprising a processor (48) for controlling the operation of said drive (20', 22') and said decoder circuitry (56).

9. A computer system as claimed in claim 8, wherein said audio controller (18') further comprises a flash memory (52) for storing data and commands for use by said processor (48) for controlling said drive (20', 22') and said decoder circuitry (56).

10. A computer system as claimed in claim 1, wherein said audio controller (18') further comprising a SMBus interface (42) to exchange commands and data along a SMBus.

11. A computer system as claimed in claim 1, wherein said audio data on said drive (20', 22') being stored as a file in a directory, said audio controller (18') being further adapted to permit users to traverse said drive (20', 22') and select desired directory and file.

12. A computer system as claimed in claim 1, wherein said audio data further comprising tag data indicative of a title, and said audio controller (18') further comprising a display interface (57) for displaying said tag data upon access of said audio data by said controller (18').

13. A computer system as claimed in claim 1, wherein said drive (20', 22') comprising a hard disk drive (20') or a CD-ROM drive (22') being adapted to operate of an IDE bus.

14. A computer system as claimed in claim 1, wherein said drive (20', 22') comprising an IDE drive and said drive interface comprising an IDE drive interface (54) for exchanging commands and data between said audio controller (18') and said drive (20', 22').

15. A computer system as claimed in claim 1, wherein said audio data comprising MP3 audio data, and said decoder circuitry (56) comprising an MP3 audio data decoder.

16. A computer system as claimed in claim 9, wherein said data and commands being supplied to said processor (48) upon activation of one of a plurality of function keys.

17. A method for playing audio files in a computer system ( 10' ) when said computer system is in an inactive state, comprising the steps of: activating an audio controller (18') if a main CPU (12') of said computer system is in an inactive state; selecting desired audio data; controlling a drive interface (54) ( of said audio controller (18') to access said audio data from a drive (20', 22') of said computer system; controlling said drive interface (54) to retrieve said audio data; and decoding selected audio data and generating a decoded audio data stream from said selected audio data, wherein said audio controller (18') including a switch (68) for switching said audio controller (18') to an inactive state when a power is supplied to said main CPU (12') such that said audio controller (18') is decoupled from a computer system bus thereby becoming transparent to said drive and for switching said audio controller (18') to an active state when said power is not being supplied to said main CPU (12') ; **characterized by that** an updatable version of decoder algorithm is stored in memory (52, 58), said selected audio data is stored in memory (50) associated with said audio controller (18'); said audio controller (18') sending decoded audio data to an external MP3 player (70) via an I/O interface when said audio controller (18') is in said active state, wherein said audio controller (18') being operated by function key functionality of said external player (70).

18. A method as claimed in claim 17 further comprising the step of: generating an analog audio signal from said decoded audio data stream.

19. A method as claimed in claim 17, further comprising the step of: traversing said drive (20', 22') to locate said desired audio data.

20. A method as claimed in claim 17, further comprising the step of: displaying information related to said audio data.

21. A method as claimed in claim 17, further comprising the step of: coupling said audio controller (18') to said main CPU (12') through a SMBus.

## Patentansprüche

1. Computersystem (10') zum Abspielen von Audiodateien, wobei das Computersystem umfasst: ein Computer-Subsystem umfassend eine System-CPU (12'), einen Systemcomputerbus und ein Laufwerk zum Speichern von Audiodateien (20', 22'); einen Audio-Controller (18') umfassend eine Laufwerk-Schnittstelle (54) für den selektiven Zugriff auf die Audiodateien von dem Laufwerk; und eine Dekoderschaltung (56) zum Dekodieren der Audiodaten und zum Generieren eines dekodierten Audiodatenstroms, wobei der Audio-Controller (18') ausgebildet ist für den Zugriff auf die, das Speichern und das Abspielen der Audiodaten und ausgebildet ist für den Zugriff auf das Laufwerk (20', 22'), um die Audiodaten abzurufen und die Audiodaten zu dekodieren, wenn sich das Computer-Subsystem in einem inaktiven Zustand befindet; wobei der Audio-Controller (18') ferner einen Schalter (68) umfasst zum Schalten des Audio-Controllers (18') in einen inaktiven Zustand, wenn dem Computer-Subsystem Strom zugeführt wird, so dass der Audio-Controller (18') von dem Computersystembus abgekoppelt wird und dadurch für das Laufwerk (20', 22') transparent wird, und zum Schalten des Audio-Controllers (18') in den aktiven Zustand, wenn der Strom dem Computer-Subsystem nicht zugeleitet wird, **dadurch gekennzeichnet, dass** der Audio-Controller (18') einen Speicher (50) enthält, der die Audiodaten speichert, und einen Speicher (52; 58), der eine updatefähige Version eines Dekoder-Algorithmus speichert; wobei der Audio-Controller (18') ausgebildet ist für das Senden dekodierter Audiodaten über eine E/A-Schnittstelle an einen externen MP3-Spieler, wenn sich der Audio-Controller (18') im aktiven Zustand befindet, wobei der Audio-Controller (18') ferner ausgebildet ist für eine Betätigung durch die Funktionalität von Funktionstasten des externen Spielers (70).

2. Computersystem nach Anspruch 1, wobei die Dekoderschaltung (56) ferner eine Digital/Analog-Schaltung (60) aufweist, die den dekodierten Audiodatenstrom empfängt und ein analoges Audiosignal generiert.

3. Computersystem nach Anspruch 1, wobei die Dekoderschaltung (56) ferner einen Zwischenspeicher (60) zur vorübergehenden Speicherung des dekodierten Audiodatenstroms aufweist.

4. Computersystem nach Anspruch 3, wobei der Zwischenspeicher (60) einen ersten First-in-first-out-(FIFO)-Speicher umfasst.

5. Computersystem nach Anspruch 1, wobei der Audio-Controller (18') ferner eine Interface-Schaltung (64) umfasst, die für den dekodierten Audiodatenstrom eine Schnittstelle zu einem externen Digital/Analog-Wandler bildet, und wobei des Computer-Subsystem ferner die externe Digital/Analog-Wandlerschaltung umfasst, für den Empfang des dekodierten Audiodatenstroms von der Interface-Schaltung (64).

6. Computersystem nach Anspruch 1, wobei der Audio-Controller (18') ferner eine LCD-Schnittstelle (57) umfasst, zum Generieren von Signalen an ein LCD-Display zum Anzeigen von dem Laufwerk zugeordneten Verzeichnis-und Datei-Informationsdaten.

7. Computersystem nach Anspruch 1, wobei der Audio-Controller (18') ferner eine Funktionstasten-Schnittstelle (46) umfasst, die mit einer Vielzahl von Funktionstasten betätigt werden kann, wobei die Funktionstasten über die Funktionstasten-Schnittstelle (46) Benutzerbefehle an den Audio-Controller (18') generieren.

8. Computersystem nach Anspruch 1, wobei der Audio-Controller (18') ferner einen Prozessor (48) zum Steuern des Betriebs des Laufwerks (20', 22') und der Dekoderschaltung (56) umfasst.

9. Computersystem nach Anspruch 8, wobei der Audio-Controller (18') ferner einen Flash-Speicher (52) zum Speichern von Daten und Befehlen zur Verwendung durch den Prozessor (48) für die Steuerung des Laufwerks (20', 22') und der Dekoderschaltung (56) umfasst.

10. Computersystem nach Anspruch 1, wobei der Audio-Controller (18') ferner eine SMBus-Schnittstelle (42) für den Austausch von Befehlen und Daten auf einem SMBus umfasst.

11. Computersystem nach Anspruch 1, wobei die Audiodaten auf dem Laufwerk (20', 22') als Datei in einem Verzeichnis gespeichert sind, wobei der Audio-Controller (18') ferner geeignet ist, dem Benutzer ein Traversieren des Laufwerks (20', 22') und die Wahl des gewünschten Verzeichnisses und der gewünschten Datei ermöglicht.

12. Computersystem nach Anspruch 1, wobei die Audiodaten ferner Tag-Daten umfassen, die einen Titel angeben, und wobei der Audio-Controller (18') ferner eine Display-Schnittstelle (57) für die Anzeige der Tag-Daten nach dem Zugriff auf die Audiodaten durch den Controller (18') umfasst.

13. Computersystem nach Anspruch 1, wobei das Laufwerk (20', 22') ein Festplattenlaufwerk (20') oder ein CD-ROM-Laufwerk (22') umfasst, das für den Betrieb von einem IDE-Bus ausgebildet ist.

14. Computersystem nach Anspruch 1, wobei das Laufwerk (20', 22') ein IDE-Laufwerk umfasst und die Laufwerk-Schnittstelle eine IDE-Laufwerkschnittstelle (54) für den Austausch von Befehlen und Daten zwischen dem Audio-Controller (18') und dem Laufwerk (20', 22') umfasst.

15. Computersystem nach Anspruch 1, wobei die Audiodaten MP3-Audiodaten umfassen und die Dekoderschaltung (56) einen MP3-Audiodatendekoder umfasst.

16. Computersystem nach Anspruch 9, wobei die Daten und Befehle nach Aktivierung einer der Vielzahl von Funktionstasten dem Prozessor (48) zugeleitet werden.

17. Verfahren zum Abspielen von Audiodateien in einem Computersystem (10'), wenn sich der Computer in einem inaktiven Zustand befindet, umfassend die folgenden Schritte: das Aktivieren eines Audio-Controllers (18'), wenn eine Haupt-CPU (12') des Computersystems in einem inaktiven Zustand ist; das Wählen gewünschter Audiodaten; das Steuern einer Laufwerk-Schnittstelle (54) des Audio-Controllers (18'), um auf die Audiodaten von einem Laufwerk (20', 22') des Computersystems zuzugreifen; das Steuern der Laufwerk-Schnittstelle (54), um die Audiodaten abzurufen; und das Dekodieren der gewählten Audiodaten und Generieren eines dekodierten Audiodatenstroms aus den gewählten Audiodaten, wobei der Audio-Controller (18') einen Schalter (68) enthält, zum Schalten des Audio-Controllers (18') in einen inaktiven Zustand, wenn Strom zur Haupt-CPU (12') geleitet wird, so dass der Audio-Controller (18) von einem Computersystembus abgekoppelt wird und dadurch für das Laufwerk transparent wird, und zum Schalten des Audio-Controllers (18') in einen aktiven Zustand, wenn der Strom nicht zur Haupt-CPU (12') geleitet wird; **dadurch gekennzeichnet, dass** eine updatefähige Version eines Dekoder-Algorithmus in dem Speicher (52, 58) gespeichert wird, wobei die gewählten Audiodaten in dem Speicher (50), der dem Audio-Controller (18') zugeordnet ist, gespeichert werden; wobei der Audio-Controller (18') über eine E/A-Schnittstelle dekodierte Audiodaten an einen externen MP3-Spieler (70) sendet, wenn sich der Audio-Controller (18') im aktiven Zustand befindet, wobei der Audio-Controller (18') durch die Funktionalität der Funktionstasten des externen Spielers (70) betätigt wird.

18. Verfahren nach Anspruch 17, ferner umfassend den Schritt des Generierens eines Audiosignals von dem dekodierten Audiodatenstrom.

19. Verfahren nach Anspruch 17, ferner umfassend den Schritt des Traversierens des Laufwerks (20', 22'), um die gewünschte Audiodatei aufzufinden.

20. Verfahren nach Anspruch 17, ferner umfassend den Schritt des Anzeigens von Informationen, die sich auf diese Audiodaten beziehen.

21. Verfahren nach Anspruch 17, ferner umfassend den Schritt des Verbindens des Audio-Controllers (18') mit der Haupt-CPU (12') über einen SMBus.

## Revendications

1. Système d'ordinateur (10') pour jouer des fichiers audio, ledit système comprenant: un sous-système d'ordinateur comprenant une unité centrale CPU (12'), un bus d'ordinateur de système et un lecteur pour enregistrer des fichiers audio (20', 22'); un contrôleur audio (18') comprenant une interface de lecteur (54) pour accéder de manière sélective lesdites données audio dudit lecteur; et un circuit décodeur (56) pour décoder les données audio et générer un train de données audio décodées, ledit contrôleur (18') étant susceptible d'accéder, enregistrer et jouer lesdites données audio et étant configuré d'accéder ledit lecteur (20', 22') pour appeler lesdites données audio et décoder lesdites données audio lorsque le sous-système d'ordinateur est dans un état inactif; ledit contrôleur audio (18) en outre comprenant un commutateur (68) pour commuter le contrôleur audio (18') à un état inactif lorsque le sous-système d'ordinateur est alimenté en un courant de sorte que ledit contrôleur audio (18') est découplé du bus d'ordinateur de système, ce faisant transparent le bus du système d'ordinateur vis à vis audit lecteur (20', 22'), et pour commuter ledit contrôleur audio (18') à un état actif lorsque le sous-système d'ordinateur n'est pas alimenté en ledit courant, **caractérisé en ce que** le contrôleur audio (18') comprend une mémoire (50) mémorisant lesdites données audio et une mémoire (52; 58) mémorisant une version d'un algorithme décodeur apte à être upgradée; ledit contrôleur audio (18') étant susceptible d'envoyer les données audio décodées à un joueur MP3 (70) via une interface d'entrée-sortie I/O lorsque le contrôleur audio (18') est dans l'état actif, ledit contrôleur audio (18') en outre étant susceptible d'être actionné par la fonctionnalité d'une touche de fonction du joueur externe (70).

2. Système d'ordinateur selon la revendication 1, dans lequel le circuit décodeur (56) en outre comprend un circuit digital-analogique (60) recevant ledit train de données audio décodées et générant un signal audio analogique.

3. Système d'ordinateur selon la revendication 1, dans lequel le circuit décodeur (56) en outre comprend une mémoire tampon (60) pour mettre au registre tampon ledit train de données audio décodées.

4. Système d'ordinateur selon la revendication 3, dans lequel ledit mémoire tampon (60) comprend une mémoire de fil d'attente (FIFO).

5. Système d'ordinateur selon la revendication 1, dans lequel le contrôleur audio (18) comprend en outre un circuit interface (64) pour interfacer ledit train de données audio décodées avec un circuit digital-analogique externe, et le sous-système d'ordinateur en outre comprend ledit circuit digital-analogique externe pour recevoir le train de données audio décodées du circuit interface (64).

6. Système d'ordinateur selon la revendication 1, dans lequel le contrôleur audio (18) comprend en outre une interface LCD (57) pour générer des signaux vers un visuel LCD pour l'affichage des données de fichier et de répertoire associées au lecteur.

7. Système d'ordinateur selon la revendication 1, dans lequel le contrôleur audio (18') en outre comprend une interface de touches de fonction (46) actionnable avec une pluralité de touches de fonction, les touches de fonction générant des commandes d'utilisateur au contrôleur audio (18') par ladite interface de touches de fonction (46).

8. Système d'ordinateur selon la revendication 1, dans lequel le contrôleur audio (18') en outre comprend un processeur (48) pour commander le fonctionnement du lecteur (20', 22') et du circuit décodeur (56).

9. Système d'ordinateur selon la revendication 8, dans lequel le contrôleur audio (18') en outre comprend une mémoire Flash (52) pour mémoriser des données et des commandes pour l'utilisation par ledit processeur (48) pour commander le lecteur (20', 22') et le circuit décodeur (56).

10. Système d'ordinateur selon la revendication 1, dans lequel le contrôleur audio (18') en outre comprend une interface d'un bus de gestion de systèmes SMBus (42) pour l'échange des commandes et des données le long d'un bus de gestion de systèmes SMBus.

11. Système d'ordinateur selon la revendication 1, dans lequel les données sur le lecteur (20', 22') sont mémorisées comme un fichier dans une répertoire, le contrôleur audio (18') en outre étant susceptibles de permettre à l'utilisateur de traverser ledit lecteur (20', 22') et de sélectionner le répertoire et fichier désirés.

12. Système d'ordinateur selon la revendication 1, dans lequel lesdites données audio en outre comprennent des données tag indiquant une chanson, et le contrôleur audio (18') en outre comprend une interface d'affichage (57) pour afficher lesdites données tag après l'accès dudit contrôleur (18') aux données audio.

13. Système d'ordinateur selon la revendication 1, dans lequel le lecteur (20', 22') comprend un lecteur de disque dur (20') ou un lecteur CD-ROM (22') susceptible d'être opéré d'un bus IDE.

14. Système d'ordinateur selon la revendication 1, dans lequel le lecteur (20', 22') comprend un lecteur IDE et l'interface lecteur comprend une interface lecteur IDE (54) pour l'échange des commandes et des données entre le contrôleur audio (18') et le lecteur (20', 22').

15. Système d'ordinateur selon la revendication 1, dans lequel les données audio comprennent des données audio MP3 et le circuit décodeur (56) comprend un décodeur de données audio MP3.

16. Système d'ordinateur selon la revendication 9, dans lequel le processeur (48) est alimenté en les données et commandes après l'activation une de la pluralité de touches de fonction.

17. Procédé de jouer des fichiers audio dans un système d'ordinateur (10') lorsque le système d'ordinateur et dans un état inactif, comprenant les étapes suivants: activer un contrôleur audio (18') lorsque une première unité centrale CPU (12') du système d'ordinateur est dans un état inactif; sélectionner des données audio désirées; commander une interface lecteur (54) du contrôleur audio (18') pour accéder aux données audio d'un lecteur (20', 22') du système d'ordinateur; commander l'interface lecteur (54) pour appeler les données audio; et décoder les données audio sélectionnées et générer un train de données audio décodées des données audio sélectionnées, le contrôleur audio (18') incluant un commutateur (68) pour commuter le contrôleur audio (18') à un état inactif lorsque la première unité centrale CPU (12') est alimentée en un courant de sorte que ledit contrôleur audio (18') est découplé du bus d'ordinateur de système, ce faisant transparent le bus du système d'ordinateur vis à vis ledit lecteur (20', 22') et pour commuter ledit contrôleur audio (18') à un état actif lorsque le sous-système d'ordinateur n'est pas alimenté en ledit courant, **caractérisé en ce qu'**une version d'un algorithme décodeur apte à être upgradée est mémorisée dans la mémoire (52, 58); lesdites données sont mémorisées dans une mémoire associée au contrôleur audio (18'); le contrôleur audio (18') envoyant des données audio décodées vers un joueur MP3 (70) via une interface d'entrée-sortie I/O lorsque le contrôleur audio (18') est dans l'état actif, ledit contrôleur audio (18') étant actionné par la fonctionnalité d'une touche de fonction du joueur externe (70).

18. Procédé selon la revendication 17, en outre comprenant l'étape de: générer un signal audio analogique dudit train de données audio décodées.

19. Procédé selon la revendication 17, en outre comprenant l'étape de: traverser ledit lecteur (20', 22') pour localiser les données audio désirées.

20. Procédé selon la revendication 17, en outre comprenant l'étape de: afficher l'information relatif aux données audio.

21. Procédé selon la revendication 17, en outre comprenant l'étape de: coupler le contrôleur audio (18') à ladite première unité centrale CPU (12') via un bus de gestion de systèmes SMBus.
